# EUROPÄISCHE PATENTANMELDUNG

(11) **EP 2 031 095 A2**
(43) Veröffentlichungstag der Anmeldung: **04.03.2009**
(21) Anmeldenummer: 08015008.9
(22) Anmeldetag: 26.08.2008
(51) Int. Cl.: C23F 11/16, C23F 11/14, C09K 8/54, C07C 323/59, C11D 1/10

(54) **Kationische Tenside enthaltende Korrosionsinhibitoren**

(30) Priorität: 31.08.2007 DE 102007041216
(71) Anmelder: Clariant International Ltd., 4132 Muttenz (CH)
(72) Erfinder: Leinweber, Dirk, 65779 Kelkheim (DE); Feustel, Michael, 55278 Köngernheim (DE)
(74) Vertreter: Mikulecky, Klaus

(57) **Zusammenfassung**

Gegenstand der Erfindung ist die Verwendung von Zusammensetzungen enthaltend Metallsalze von Verbindungen der Formel (1) 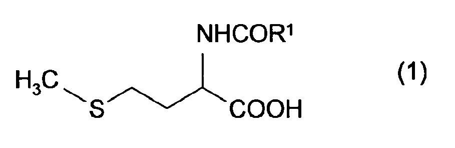 worin R¹ C₁- bis C₂₉-Alkyl, C₂- bis C₂₉-Alkenyl, C₆- bis C₃₀-Aryl oder C₇- bis C₃₀-Alkylaryl bedeutet, und kationische Tenside als Korrosionsinhibitoren.

## Beschreibung

Die vorliegende Erfindung betrifft ein Verfahren zur Korrosionsinhibierung an und in Einrichtungen zur Förderung und Transport von Kohlenwasserstoffen in der Erdölförderung und -verarbeitung, indem man dem korrosiven System ein Metallsalz von N-Acylmethionin und ein kationisches Tensid zusetzt.

In technischen Prozessen, bei denen Metalle mit Wasser oder auch mit Öl-Wasser-Zweiphasensystemen in Kontakt kommen, besteht die Gefahr der Korrosion. Diese ist besonders ausgeprägt, wenn die wässrige Phase wie bei Erdölgewinnungs- und Verarbeitungsprozessen stark salzhaltig oder durch gelöste Sauergase, wie Kohlendioxid bzw. Schwefelwasserstoff, azid ist. Daher sind die Ausbeutung einer Lagerstätte und die Verarbeitung von Erdöl ohne spezielle Additive zum Schutz der eingesetzten Ausrüstungen nicht möglich.

Geeignete Korrosionsschutzmittel für die Erdölförderung und -verarbeitung sind zwar schon seit langem bekannt, weisen jedoch oftmals eine zu geringe Effektivität bei niedriger Dosierung auf.

Als typische Korrosionsinhibitoren des Standes der Technik besitzen Amide, Amidoamine bzw. Imidazoline von Fettsäuren und Polyaminen eine äußerst gute Öllöslichkeit und sind somit in der korrosiven Wasserphase aufgrund schlechter Verteilungsgleichgewichte (Partitioning) nur in geringer Konzentration vorhanden. Demgemäß müssen diese Produkte für eine optimale Wirkung in hoher Dosierung eingesetzt werden.

Quartäre Alkylammoniumverbindungen (Quats) stellen alternative Korrosionsschutzmittel des Standes der Technik dar, die neben den korrosionsinhibierenden auch biostatische Eigenschaften besitzen können. Trotz einer verbesserten Wasserlöslichkeit zeigen die Quats, zum Beispiel im Vergleich zu den Imidazolinen, eine deutlich reduzierte Filmpersistenz und führen daher ebenfalls nur in höherer Dosierung zu einem effektiven Korrosionsschutz.

US-4 240 823 beschreibt N-Acyl-Methionin Derivate, die als Wachstumsregulatoren im Bereich des Pflanzenschutzes eingesetzt werden.

In JP-A-8 337 562 und JP-A-8 337 563 werden N-Acyl-Aminosäuren und ihre Alkalimetallsalze beschrieben, die auch als Korrosionsinhibitoren eingesetzt werden können.

In JP-A-49 026 145 werden N-Acyl-Aminosäure Alkalimetallsalze beschrieben, die als Korrosionsinhibitoren eingesetzt werden können. Als Beispiel wird N-Lauroylglycin Natriumsalz genannt.

Nachteilig an den Verbindungen des Standes der Technik ist jedoch, dass ihre Wirksamkeit nicht ausreichend ist und dass sie stark zum Schäumen neigen.

Aufgabe der vorliegenden Erfindung war es, neue Korrosionsinhibitoren zu finden, die bei verbessertem Korrosionsschutz auch eine geringere Schaumbildung im Vergleich zu den Korrosionsinhibitoren des Standes der Technik bieten.

Es wurde nun überraschenderweise gefunden, dass N-Acyl-Methionin-Metallsalze in Mischung mit kationischen Tensiden eine ausgezeichnete Wirkung als Korrosionsinhibitoren und eine sehr geringe Schaumbildungstendenz aufweisen.

Gegenstand der Erfindung ist somit die Verwendung von Zusammensetzungen, enthaltend Metallsalze von Verbindungen der Formel (1) 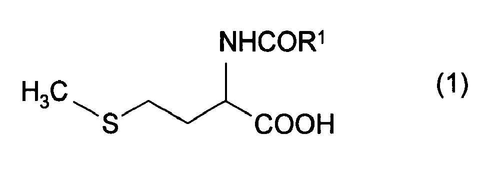 worin R¹ C₁- bis C₂₉-Alkyl, C₂- bis C₂₉-Alkenyl, C₆- bis C₃₀-Aryl oder C₇- bis C₃₀-Alkylaryl bedeutet, und kationische Tenside als Korrosionsinhibitoren.

Ein weiterer Gegenstand der Erfindung ist ein Verfahren zur Inhibierung von Korrosion an Metalloberflächen, insbesondere von eisenhaltigen Metallen, indem einem korrosiven System, welches mit den Metalloberflächen in Kontakt steht, mindestens ein Metallsalz von Verbindungen der Formel (1) und ein kationisches Tensid zugesetzt wird.

Ein weiterer Gegenstand der Erfindung sind Zusammensetzungen, enthaltend mindestens ein Metallsalz einer Verbindung der Formel (1) und mindestens ein kationisches Tensid.

Ein weiterer Gegenstand der Erfindung ist die Verwendung von Metallsalzen von Verbindungen der Formel (1) zusammen mit kationischen Tensiden als Metallbearbeitungsmittel. Hierbei bieten die erfindungsgemäßen Zusammensetzungen auch bei starker mechanischer Belastung, wie beim Schleifen, Schneiden und Bohren von Metallwerkstücken einen sehr guten Korrosionsschutz.

Korrosive Systeme im Sinne dieser Erfindung sind bevorzugt flüssig/flüssig- bzw. flüssig/gasförmig-Mehrphasensysteme, bestehend aus Wasser und Kohlenwasserstoffen, die in freier und/oder gelöster Form korrosive Bestandteile, wie Salze und Säuren, enthalten. Die korrosiven Bestandteile können auch gasförmig sein, wie etwa Schwefelwasserstoff und Kohlendioxid.

Kohlenwasserstoffe im Sinne dieser Erfindung sind organische Verbindungen, die Bestandteile des Erdöls/Erdgases sind, und deren Folgeprodukte. Kohlenwasserstoffe im Sinne dieser Erfindung sind auch leichtflüchtige Kohlenwasserstoffe, wie beispielsweise Methan, Ethan, Propan, Butan. Für die Zwecke dieser Erfindung zählen dazu auch die weiteren gasförmigen Bestandteile des Erdöls/Erdgases, wie etwa Schwefelwasserstoff und Kohlendioxid.

Bevorzugte Tenside sind solche, die in einer Konzentration von 0,5 Gew.-% in Wasser eine Oberflächenspannung dieser wässrigen Lösung von höchstens 55 mN/m, besonders bevorzugt von höchstens 50 mN/m und speziell von höchstens 45 mN/m bewirken.

In einer weiteren bevorzugten Ausführungsform der Erfindung steht R¹ für C₃- bis C₂₃-Alkyl, C₃- bis C₂₃-Alkenyl, C₆- bis C₂₄-Aryl- oder C₇- bis C₂₅-Alkylaryl, insbesondere für eine Alkyl- oder Alkenylgruppe mit 7 bis 17 Kohlenstoffatomen.

Geeignete kationische Tenside werden im Folgenden beschrieben.

Geeignete kationische Tenside liegen vorzugsweise als Chloride oder Bromide vor, können aber auch als Methosulfate eingesetzt werden.

Geeignete kationische Tenside sind beispielsweise quartäre Ammoniumsalze wie Di-(C₈-C₂₄)-Alkyldimethylammoniumchlorid oder -bromid, vorzugsweise Di-(C₁₂-C₁₈)-Alkyl-dimethylammoniumchlorid oder -bromid, z. B. Distearyldimethylammoniumchlorid oder -bromid, Ditalgalkyldimethylammoniumchlorid oder -bromid, Dioleyl-dimethylammoniumchlorid oder -bromid, Dicocosalkyldimethylammoniumchlorid oder -bromid; (C₈-C₂₄)-Alkyldimethylethylammoniumchlorid oder -bromid; (C₈-C₂₄)-Alkyl-trimethylammoniumchlorid oder -bromid, vorzugsweise Cetyltrimethylammoniumchlorid oder -bromid und (C₂₀-C₂₂)-Alkyltrimethylammoniumchlorid oder -bromid; (C₈-C₂₄)-Alkyl-dimethylbenzylammoniumchlorid oder -bromid, vorzugsweise (C₁₂-C₁₈)-Alkyl-dimethylbenzylammoniumchlorid; N-(C₁₀-C₁₈)-Alkylpyridiniumchlorid oder -bromid, vorzugsweise N-(C₁₂-C₁₆)-Alkylpyridiniumchlorid oder -bromid; N-(C₁₀-C₁₈)-Alkyl-isochinoliniumchlorid, -bromid oder -monoalkylsulfat; N-(C₁₂-C₁₈)-Alkyl-polyoylaminoformylmethylpyridiniumchlorid; N-(C₁₂-C₁₈)-Alkyl-N-methylmorpholinium-chlorid, -bromid oder -monoalkylsulfat; N-(C₁₂-C₁₈)-Alkyl-N-ethylmorpholiniumchlorid, -bromid oder -monoalkylsulfat; (C₁₆-C₁₈)-Alkylpentaoxethylammoniumchlorid; Diisobutyl-phenoxyethoxyethyldimethylbenzylammoniumchlorid; Salze des N,N-Diethylaminoethylstearylamids und -oleylamids mit Salzsäure, Essigsäure, Milchsäure, Zitronensäure, Phosphorsäure; N-Acyl-aminoethyl-N,N-diethyl-N-methyl-ammoniumchlorid, -bromid oder -monoalkylsulfat und N-Acylaminoethyl-N,N-diethyl-N-benzylammoniumchlorid, -bromid oder -monoalkylsulfat, wobei Acyl vorzugsweise für Stearyl oder Oleyl steht.

Eine besonders bevorzugte Klasse von kationischen Tensiden sind die so genannten Esterquats, z. B. das Triethanolamindiesterquat und das Diethanolmethylamindiesterquat. Diese werden ausgehend von Aminoalkoholen wie Triethanolamin oder Diethanolmethylamin hergestellt, indem man die Aminoalkohole mit ein bis zwei (im Falle des Triethanolamin bis drei), vorzugsweise mit zwei Mol einer Fettsäure verestert und anschließend mit einem Methylierungsmittel wie Methylchlorid, Methylbromid oder mit Dimethylsulfat quaterniert. Als Fettsäuren setzt man zur Veresterung C₈-C₂₄-Fettsäuren ein, die gesättigt oder ungesättigt sein können, wie z. B. Stearinsäure, Talgfettsäure (auch teilgehärtete), Kokosfettsäure, Behensäure und Ölsäure.

Weitere bevorzugte kationische Tenside sind Alkylhydroxyethylammoniumsalze gemäß der Formel (2) 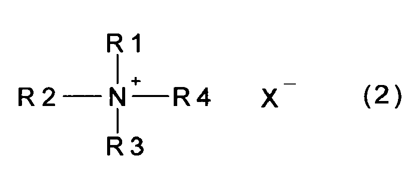 worin R1 für eine lineare oder verzweigte, gesättigte oder ungesättigte Alkylgruppe mit 5 bis 22 Kohlenstoffatomen, bevorzugt 8 bis 18 Kohlenstoffatomen, besonders bevorzugt 12 bis 14 Kohlenstoffatomen, R2 für eine Methylgruppe, R3 für eine Methylgruppe oder eine Gruppe der Formel -A-(OA)ₙ-OH steht, wobei A eine -C₂H₄-und/oder -C₃H₆-Gruppe und n eine Zahl von 0 bis 20 sein kann, R4 für eine Gruppe der Formel -A-(OA)ₙ-OH steht und X ein Anion bedeutet. X ist beispielsweise Chlorid, Bromid, Iodid, Fluorid, Sulfat, Hydrogensulfat, Carbonat, Hydrogencarbonat, Acetat, Citrat, Phosphat, Mono- und Dihydrogenphosphat, Pyrophosphat, Polyphosphat, Metaphosphat, Nitrat, Methylsulfat, Phosphonat, Methylphosphonat, Methandisulfonat, Methylsulfonat, Ethansulfonat oder ein Anion der Formeln R6SO₃, R7SO₄ oder R6COO, worin R6 und R7 C₂-C₂₀-, vorzugsweise C₁₀-C₁₈-Alkyl, und R7 zusätzlich auch C₁-C₁₈-Alkylphenyl bedeuten.

Besonders bevorzugt als Verbindung der Formel (2) ist quaternäres C₁₂-C₁₄-Alkyldimethylhydroxyethylammoniumchlorid oder -methosulfat.

Weitere bevorzugte kationische Tenside sind Imidazolin-Quats bzw. -Salze der Formeln (3) bis (5): 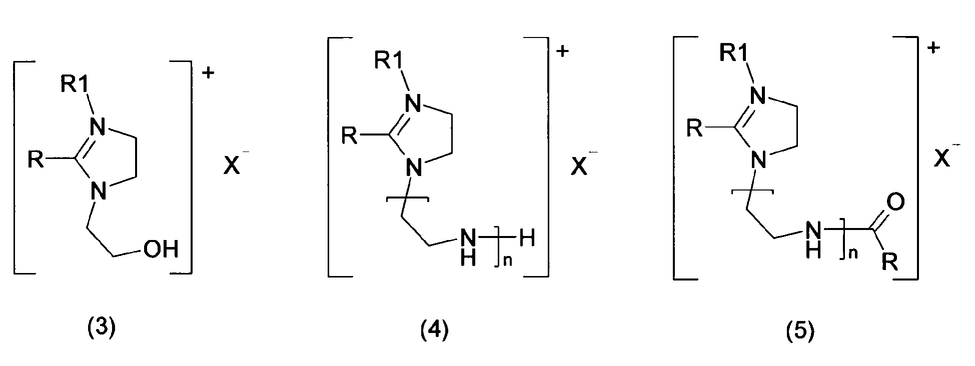 worin R eine Alkyl-, Alkenyl-, Alkylarylgruppe mit 4 bis 22 Kohlenstoffatomen, R1 ein Wasserstoffatom, eine Alkyl- oder Hydroxyalkylgruppe mit 1 bis 3 Kohlenstoffatomen, n eine Zahl von 0 bis 10 und X ein Anion bedeuten. X ist beispielsweise Chlorid, Bromid, Sulfat, Hydrogensulfat, Acetat oder Methylsulfat, kann aber auch die für X in Formel 2 angegebenen Bedeutungen haben.

Für besonders bevorzugte Verbindungen der Formeln (3) bis (5) gilt R = C₇-C₁₇-Alkyl oder Alkenyl, R1 = H oder CH₃, n = 1 bis 4 und X = Cl oder Acetat.

In wässrigen Formulierungen neigen Imidazoliniumverbindungen der Formeln (3) bis (5) zur Hydrolyse zu den entsprechenden Amidoamin-Verbindungen, welche ebenfalls erfindungsgemäß eingesetzt werden können.

Die erfindungsgemäßen Zusammensetzungen können alleine oder in Kombination mit anderen bekannten Korrosionsinhibitoren eingesetzt werden. Im Allgemeinen wird man so viel der erfindungsgemäßen Zusammensetzung einsetzen, dass man unter den gegebenen Bedingungen einen ausreichenden Korrosionsschutz erhält.

Bevorzugte Einsatzkonzentrationen der erfindungsgemäßen Zusammensetzungen sind 5 bis 5000 ppm, bevorzugt 10 bis 1000, insbesondere 15 bis 150 ppm. Das Mischungsverhältnis zwischen Metallsalz der Verbindung 1 und kationischem Tensid beträgt vorzugsweise 1:9 bis 9:1, insbesondere 3:7 bis 7:3.

Besonders geeignet als Korrosionsinhibitoren sind auch Mischungen der erfindungsgemäßen Zusammensetzungen mit anderen Korrosionsinhibitoren des Standes der Technik.

### Beispiele:

### Allgemeine Vorschrift für die Herstellung von N-Acyl-Methionin-Metallsalzen

In einer Standard-Rührapparatur werden 1 mol DL-Methionin in 300 mL Wasser mit 50 %iger wässriger Metallhydroxidlösung neutralisiert. Zu der gebildeten Lösung werden bei 15-20 °C 1 mol Carbonsäurechlorid zudosiert, wobei der pH-Wert durch parallele Dosierung von 15 %iger wässriger Metallhydroxidlösung bei 10-13 gehalten wird. Die Reaktionslösung wird 3 h bei Raumtemperatur nachgerührt. Das erhaltene N-Acyl-Methionin-Metallsalz wird mittels Alkalizahl (AZ) und Wirkstoffgehalt charakterisiert. Prozentangaben sind Gewichtsprozente bezogen auf das Gewicht des erfindungsgemäßen Salzes.

### Beispiel 1 N-Kokoyl-DL-Methionin-Natriumsalz (Vergleich)

Aus Kokosfettsäurechlorid, DL-Methionin und Natriumhydroxid wurde N-Kokoyl-DL-Methionin-Natriumsalz mit einem Wirkstoffgehalt von 40 % und einer AZ = 65 mg KOH/g erhalten.

### Beispiel 2 N-Oleoyl-DL-Methionin-Kaliumsalz (Vergleich)

Aus Ölsäurechlorid, DL-Methionin und Kaliumhydroxid wurde N-Oleyl-DL-Methionin-Kaliumsalz mit einem Wirkstoffgehalt von 40 % und einer AZ = 56 mg KOH/g erhalten.

### Beispiel 3 Korrosionsinhibitor-Mischung 1

40 g N-Kokoyl-DL-Methionin-Natriumsalz aus Beispiel 1 wurden mit 40 g einer 20 %igen wässrigen Lösung von Cetyltrimethylammoniumchlorid und 20 g Butylglykol vermischt.

### Beispiel 4 Korrosionsinhibitor-Mischung 2

40 g N-Kokoyl-DL-Methionin-Natriumsalz aus Beispiel 1 wurden mit 8 g Dicocosalkyldimethylammoniumchlorid, 20 g Butylglykol und 32 g Wasser vermischt.

### Beispiel 5 Korrosionsinhibitor-Mischung 3

40 g N-Kokoyl-DL-Methionin-Natriumsalz aus Beispiel 1 wurden mit 40 g einer 20 %igen wässrigen Lösung von C₁₂-C₁₈-Alkyldimethylbenzylammoniumbromid und 20 g Butylglykol vermischt.

### Beispiel 6 Korrosionsinhibitor-Mischung 4

40 g N-Kokoyl-DL-Methionin-Natriumsalz aus Beispiel 1 wurden mit 8 g Triethanolammmonium(dioleylester)methosulfat, 20 g Butylglykol und 32 g Wasser vermischt.

### Beispiel 7 Korrosionsinhibitor-Mischung 5

40 g N-Kokoyl-DL-Methionin-Natriumsalz aus Beispiel 1 wurden mit 8 g C₁₂-C₁₄-Alkyldimethylhydroxyethylammoniummethosulfat, 20 g Butylglykol und 32 g Wasser vermischt.

### Beispiel 8 Korrosionsinhibitor-Mischung 6

40 g N-Kokoyl-DL-Methionin-Natriumsalz aus Beispiel 1 wurden mit 8 g Oleyl(hydroxyethyl)imidazoliniumacetat, 20 g Butylglykol und 32 g Wasser vermischt.

### Beispiel 9 Korrosionsinhibitor-Mischung 7

40 g N-Kokoyl-DL-Methionin-Natriumsalz aus Beispiel 1 wurden mit 8 g Kokoyl(aminoethyl)methylimidazoliniumchlorid, 20 g Butylglykol und 32 g Wasser vermischt.

### Beispiel 10 Korrosionsinhibitor-Mischung 8

40 g N-Oleoyl-DL-Methionin-Kaliumsalz aus Beispiel 2 wurden mit 40 g einer 20 %igen wässrigen Lösung von Cetyltrimethylammoniumchlorid und 20 g Butylglykol vermischt.

### Beispiel 11 Korrosionsinhibitor-Mischung 9

40 g N-Oleoyl-DL-Methionin-Kaliumsalz aus Beispiel 2 wurden mit 8 g Dicocosalkyldimethylammoniumchlorid, 20 g Butylglykol und 32 g Wasser vermischt.

### Beispiel 12 Korrosionsinhibitor-Mischung 10

40 g N-Oleoyl-DL-Methionin-Kaliumsalz aus Beispiel 2 wurden mit 40 g einer 20 %igen wässrigen Lösung von C₁₂-C₁₈-Alkyldimethylbenzylammoniumbromid und 20 g Butylglykol vermischt.

### Beispiel 13 Korrosionsinhibitor-Mischung 11

40 g N-Oleoyl-DL-Methionin-Kaliumsalz aus Beispiel 2 wurden mit 8 g Triethanolammmonium(dioleylester)methosulfat, 20 g Butylglykol und 32 g Wasser vermischt.

### Beispiel 14 Korrosionsinhibitor-Mischung 12

40 g N-Oleoyl-DL-Methionin-Kaliumsalz aus Beispiel 2 wurden mit 8 g C₁₂-C₁₄-Alkyldimethylhydroxyethylammoniummethosulfat, 20 g Butylglykol und 32 g Wasser vermischt.

### Beispiel 15 Korrosionsinhibitor-Mischung 13

40 g N-Oleoyl-DL-Methionin-Kaliumsalz aus Beispiel 2 wurden mit 8 g Oleyl(hydroxyethyl)imidazoliniumacetat, 20 g Butylglykol und 32 g Wasser vermischt.

### Beispiel 16 Korrosionsinhibitor-Mischung 14

40 g N-Oleoyl-DL-Methionin-Kaliumsalz aus Beispiel 2 wurden mit 8 g Kokoyl(aminoethyl)methylimidazoliniumchlorid, 20 g Butylglykol und 32 g Wasser vermischt.

### Beispiel 17 Korrosionsinhibitor-Mischung 15

55 g N-Kokoyl-DL-Methionin-Natriumsalz aus Beispiel 1 wurden mit 2 g Oleyl(hydroxyethyl)imidazoliniumacetat, 20 g Butylglykol und 23 g Wasser vermischt.

### Wirksamkeit der erfindungsgemäßen Verbindungen als Korrosionsinhibitoren

Die erfindungsgemäßen Verbindungen wurden als Korrosionsinhibitoren im Shell-Wheel-Test geprüft. Coupons aus C-Stahl (DIN 1.1203 mit 15 cm² Oberfläche) wurden in eine Salzwasser/Petroleum-Mischung (9:1,5 %ige NaCl-Lösung mit Essigsäure auf pH 3,5 gestellt) eingetaucht und bei einer Umlaufgeschwindigkeit von 40 rpm bei 70 °C 24 Stunden diesem Medium ausgesetzt. Die Dosierung des Inhibitors betrug 50 ppm einer 24 % Lösung des Inhibitors. Die Schutzwerte wurden aus der Massenabnahme der Coupons, bezogen auf einen Blindwert, berechnet.

In den folgenden Tabellen bezeichnet "Vergleich 1" ein handelsübliches Rückstandsamin - Quat auf Basis Dikokosalkyl-dimethylammoniumchlorid, "Vergleich 2" ein handelsübliches Imidazolin-Salz auf Basis Ölsäure-Diethylentriamin und "Vergleich 3" ein Beispiel aus DE-10 2006 002 784 (N-Kokoyl-DL-Methionin-Morpholiniumsalz, Korrosionsinhibitor des Standes der Technik).

**Tabelle 1: (Shell-Wheel-Test)**

| Beispiel | Korrosionsinhibitor | ø Schutz % |
|---|---|---|
| Vergleich 1 | Standard-Quat | 28 |
| Vergleich 2 | Ölsäure-DETA-imidazolin | 70 |
| Vergleich 3 | N-Kokoyl-DL-Methionin-Morpholiniumsalz | 75 |
| Vergleich 4 | aus Beispiel 1 | 67 |
| Vergleich 5 | aus Beispiel 2 | 69 |
| 18 | aus Beispiel 3 | 83 |
| 19 | aus Beispiel 4 | 80 |
| 20 | aus Beispiel 5 | 86 |
| 21 | aus Beispiel 6 | 86 |
| 22 | aus Beispiel 7 | 85 |
| 23 | aus Beispiel 8 | 93 |
| 24 | aus Beispiel 9 | 94 |
| 25 | aus Beispiel 10 | 87 |
| 26 | aus Beispiel 11 | 86 |
| 27 | aus Beispiel 12 | 85 |
| 28 | aus Beispiel 13 | 85 |
| 29 | aus Beispiel 14 | 89 |
| 30 | aus Beispiel 15 | 95 |
| 31 | aus Beispiel 16 | 95 |
| 32 | aus Beispiel 17 | 80 |

Wie aus Tabelle 1 zu erkennen ist, weisen die erfindungsgemäßen Zusammensetzungen sehr gute Korrosionsschutzeigenschaften bei sehr niedriger Dosierung auf und übertreffen die Wirksamkeit der Inhibitoren des Standes der Technik zum Teil sogar deutlich.

Beispiel 32 zeigt im Vergleich zu Beispiel 23, dass der synergistische Effekt des N-Acylmethionin-Metallsalzes in Kombination mit einem kationischen Tensid bei einem Verhältnis von > 9:1 zwar abnimmt, aber immer noch vorhanden ist.

### Tabelle 2 (Schüttel-Schaumtest):

Die Schaumeigenschaften wurden mit der Schüttelschaum-Methode überprüft. Dazu wurden 50 ml einer 3 %igen wässrigen Lösung des entsprechenden Korrosionsinhibitors in VE-Wasser in einem verschlossenen 100 ml - Messzylinder innerhalb von 10 Sekunden 20-mal geschüttelt. Für die Beurteilung des Schaumverhaltens wurden nach Beendigung des Schüttelns das Gesamtvolumen der Lösung (Schaumhöhe) und die Schaumzerfallzeit (Zeit bis Erreichen des Ausgangsvolumens von 50 ml) herangezogen. Im Allgemeinen ist dieses Prüfverfahren mäßig reproduzierbar, eignet sich jedoch hervorragend für eine tendenzielle Abschätzung des Schaumverhaltens in schwach schäumend, schäumend oder stark schäumend.

| Beispiel | Korrosionsinhibitor | Schaumverhalten |
|---|---|---|
| Vergleich 1 | Standard-Quat | stark schäumend |
| Vergleich 2 | Ölsäure-DETA-imidazolin | stark schäumend |
| Vergleich 3 | N-Kokoyl-DL-Methionin-Morpholiniumsalz | schäumend |
| Vergleich 4 | aus Beispiel 1 | schäumend |
| Vergleich 5 | aus Beispiel 2 | schäumend |
| 18 | aus Beispiel 3 | schwach schäumend |
| 19 | aus Beispiel 4 | schwach schäumend |
| 20 | aus Beispiel 5 | schwach schäumend |
| 21 | aus Beispiel 6 | schwach schäumend |
| 22 | aus Beispiel 7 | schwach schäumend |
| 23 | aus Beispiel 8 | schwach schäumend |
| 24 | aus Beispiel 9 | schwach schäumend |
| 25 | aus Beispiel 10 | schwach schäumend |
| 26 | aus Beispiel 11 | schwach schäumend |
| 27 | aus Beispiel 12 | schwach schäumend |
| 28 | aus Beispiel 13 | schwach schäumend |
| 29 | aus Beispiel 14 | schwach schäumend |
| 30 | aus Beispiel 15 | schwach schäumend |
| 31 | aus Beispiel 16 | schwach schäumend |
| 32 | aus Beispiel 17 | schwach schäumend |

Tabelle 2 zeigt, dass die erfindungsgemäßen Verbindungen eine deutlich geringere Schaumbildungstendenz aufweisen als die Verbindungen aus dem Stand der Technik.

## Patentansprüche

1. Verwendung von Zusammensetzungen enthaltend Metallsalze von Verbindungen der Formel (1) 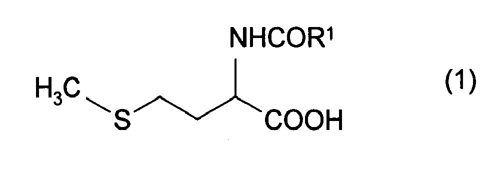 worin R¹ C₁- bis C₂₉-Alkyl, C₂- bis C₂₉-Alkenyl, C₆- bis C₃₀-Aryl oder C₇- bis C₃₀-Alkylaryl bedeutet, und kationische Tenside als Korrosionsinhibitoren.

2. Verwendung nach Anspruch 1, wobei R¹ für eine Alkyl- oder Alkenylgruppe von 7 bis 17 Kohlenstoffatomen steht.

3. Verwendung nach Anspruch 1 und/oder 2, wobei das Metallsalz ein Alkalimetallsalz ist.

4. Verwendung nach einem oder mehreren der Ansprüche 1 bis 3, wobei das kationische Tensid ein quartäres Ammoniumsalz ist, welches mindestens eine mit dem Stickstoffatom der Ammoniumgruppe verbundene C₈- bis C₂₄-Alkyl- oder Alkenylgruppe enthält.

5. Verwendung nach einem oder mehreren der Ansprüche 1 bis 4, wobei das kationische Tensid ein Esterquat ist, welches durch Veresterung eines Aminoalkohols mit einer C₈- bis C₂₄-Fettsäure, und nachfolgender Quaternierung der Aminogruppen mit einem Methylierungsmittel erhältlich ist.

6. Verwendung nach einem oder mehreren der Ansprüche 1 bis 5, wobei das kationische Tensid der Formel (2) entspricht, 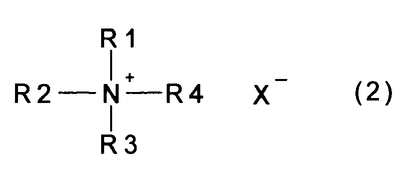 worin
R1 C₅- bis C₂₂-Alkyl
R2 Methyl
R3 Methyl oder -A-(OA)ₙ-OH
R4 -A-(OA)ₙ-OH
A -C₂H₄-
n eine Zahl von 0 bis 20
X ein geeignetes Anion
bedeuten.

7. Verwendung nach einem oder mehreren der Ansprüche 1 bis 6, wobei das kationische Tensid den Formeln (3) bis (5) entspricht, 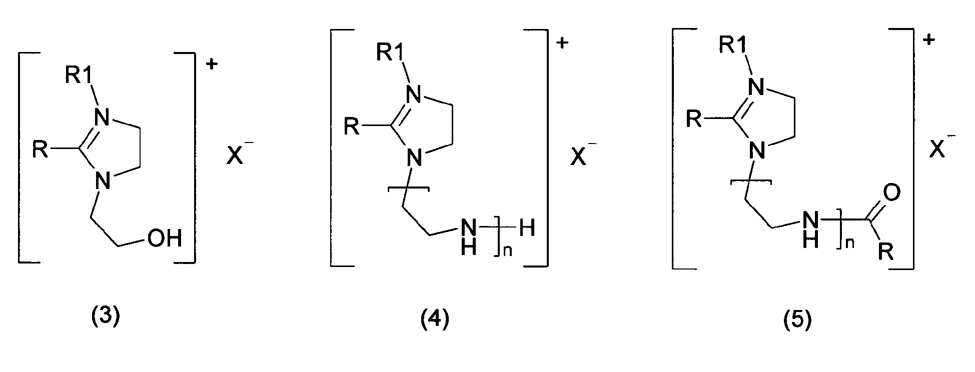 worin
R C₄- bis C₂₂-Alkyl, C₄- bis C₂₂-Alkenyl oder C₄- bis C₂₂-Alkylaryl
R1 H, C₁- bis C₃-Alkyl oder C₂- bis C₃-Hydroxyalkyl
n eine Zahl von 0 bis 10
X ein geeignetes Anion
bedeuten.

8. Verwendung nach Anspruch 6 oder 7, worin X für ein Anion ausgewählt aus Chlorid, Bromid, Iodid, Fluorid, Sulfat, Hydrogensulfat, Carbonat, Hydrogencarbonat, Acetat, Citrat, Phosphat, Mono- und Di-Hydrogenphosphat, Pyrophosphat, Polyphosphat, Metaphosphat, Nitrat, Methylsulfat, Phosphonat, Methylphosphonat, Methandisulfonat, Methylsulfonat, Ethansulfonat oder ein Anion der Formeln R⁶SO₃, R⁷SO₄ oder R⁶COO, worin R⁶ und R⁷ C₂-C₂₀-, vorzugsweise C₁₀-C₁₈-Alkyl, und R⁷ zusätzlich auch C₁-C₁₈-Alkylphenyl bedeuten, steht.

9. Verwendung nach einem oder mehreren der Ansprüche 1 bis 8, worin die Gesamtmenge an Metallsalz und kationischem Tensid zwischen 5 und 5000 ppm liegt.

10. Verwendung nach einem oder mehreren der Ansprüche 1 bis 9, worin das Gewichtsverhältnis zwischen Metallsalz und kationischem Tensid zwischen 1:9 und 9:1 liegt.

11. Verwendung nach einem oder mehreren der Ansprüche 1 bis 10 als Korrosionsinhibitoren an und in Einrichtungen zur Förderung und Transport von Kohlenwasserstoffen in der Erdölförderung und -verarbeitung.

12. Verwendung nach einem oder mehreren der Ansprüche 1 bis 11 als Korrosionsinhibitoren in Metallbearbeitungshilfsmitteln.

13. Zusammensetzungen, enthaltend mindestens ein Metallsalz einer Verbindung der Formel (1) 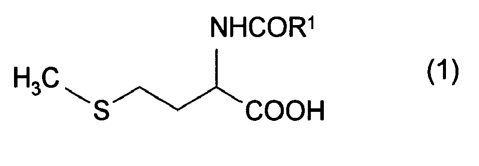 worin R¹ C₁- bis C₂₉-Alkyl, C₂- bis C₂₉-Alkenyl, C₆- bis C₃₀-Aryl oder C₇- bis C₃₀-Alkylaryl bedeutet, sowie mindestens ein kationisches Tensid.

14. Zusammensetzungen nach Anspruch 13, worin das Gewichtsverhältnis von Metallsalz zu kationischem Tensid zwischen 9:1 und 1:9 liegt.
